# EUROPÄISCHE PATENTSCHRIFT

(11) **EP 2 668 350 B1**
(45) Veröffentlichungstag und Bekanntmachung des Hinweises auf die Patenterteilung: **30.08.2017**
(21) Anmeldenummer: 12701000.7
(22) Anmeldetag: 25.01.2012
(51) Int. Cl.: E04F 15/02, F16B 5/00

(54) **PANEEL**
PANEL
PANNEAU

(30) Priorität: 28.01.2011 DE 102011009746; 22.11.2011 DE 102011086846
(43) Veröffentlichungstag der Anmeldung: 04.12.2013
(60) Teilanmeldung: 17165187.0
(73) Patentinhaber: Akzenta Paneele + Profile GmbH, 56759 Kaisersesch (DE)
(72) Erfinder: HANNIG, Hans-Jürgen, 51427 Bergisch Gladbach (DE)
(74) Vertreter: Lippert Stachow Patentanwälte Rechtsanwälte
(86) Internationale Anmeldenummer: PCT/EP2012/051139
(87) Internationale Veröffentlichungsnummer: WO 2012/101171

(56) Entgegenhaltungen:
- WO-A1-2004/048716
- WO-A2-2010/015516
- BE-A3- 1 018 949
- US-B1- 6 505 452

## Beschreibung

Die Erfindung betrifft ein Paneel, umfassend eine Oberseite, eine Unterseite, einen Rumpf, komplementäre Verriegelungsmittel, die paarweise an sich gegenüberliegenden Paneelkanten vorgesehen sind, wenigstens ein Paar Verriegelungsmittel mit Hakenprofilen, nämlich einem Aufnahmehaken, und diesem gegenüberliegend einem Arretierhaken, mit der Maßgabe, dass der Aufnahmehaken rumpffern angeordnet einen Hakenrand und rumpfnäher angeordnet eine Aufnahmeaussparung aufweist, wobei die Aufnahmeaussparung zur Oberseite offen ist, dass der Arretierhaken mit einer rumpfnäher angeordneten und zur Unterseite offenen Arretieraussparung versehen ist und einen rumpffern angeordneten Arretierabsatz aufweist, der in senkrechter Fügerichtung in die Aufnahmeaussparung des Aufnahmehakens passt, dass der Arretierhaken eine rumpfferne Querfugenfläche und gleichfalls rumpffern eine vertikal wirkende Arretierkontur aufweist, dass der Aufnahmehaken rumpfnäher eine Querfugenfläche und gleichfalls rumpfnäher eine Formschlusskontur aufweist, die formschlüssig mit der rumpffernen Arretierkontur des Arretierhakens zusammenpasst, damit eine Verriegelung senkrecht zur Ebene montierter Paneele bewirkbar ist, dass der Arretierhaken rumpfnäher angeordnet eine Horizontalverriegelungsfläche an seinem Arretierabsatz aufweist, dass der Aufnahmehaken rumpffern angeordnet eine Horizontalverriegelungsfläche in der Aufnahmeaussparung aufweist, dass an dem Aufnahmehaken eine Aufnahmeöffnung gebildet ist, durch welche der Arretierabsatz im Wesentlichen in Fügerichtung in die Aufnahmeaussparung einfügbar ist, w o-bei der Arretierabsatz und die Aufnahmeöffnung so gestaltet sind, dass das Absatzende während einer Fügebewegung ohne elastische Verformung der Hakenprofile zunächst soweit in die Aufnahmeöffnung hineinpasst, dass die Horizontalverriegelungsfläche des Arretierhakens mit einem Teil ihrer Fläche Kontakt mit der Horizontalverriegelungsfläche des Aufnahmehakens erhält.

Ein gattungsgemäßes Paneel ist aus der DE 601 29 796 T2 bekannt. Diese schlägt ein Ausführungsbeispiel vor, bei dem der Arretierhaken ein stückweit in den Aufnahmehaken hineinpasst, so dass die Horizontalverriegelungsfläche des Arretierhakens mit einem Teil ihrer Fläche Kontakt mit der Horizontalverriegelungsfläche des Aufnahmehakens erhält, ohne das bis dahin eine elastische Verformung der Hakenprofile erfolgen muss.

Aus der nachveröffentlichten DE 10 2010 063 976 ist ein Paneel bekannt, dessen Aufnahmehaken einen Biegesteg in Kombination mit einer federnden Rastlasche aufweist.

Die WO 2010/015516 A2 schlägt ein Paneel vor, bei dem der Hakenrand des Aufnahmehakens ohne Biegesteg auskommt. Stattdessen hindert der Arretierhaken den Aufnahmehaken daran, nach unten gebogen zu werden. Der Erfindung liegt die Aufgabe zugrunde, ein Paneel zu schaffen, dessen Hakenprofile sich einfach verbinden lassen und die trotzdem eine feste Verbindung ermöglichen.

Erfindungsgemäß wird die Aufgabe dadurch gelöst, dass der Hakenrand des Aufnahmehakens und die Arretieraussparung des Arretierhakens eine untere Verrastung bilden, wobei rumpffern an dem Hakenrand des Aufnahmehakens ein weibliches Rastelement oder männliches Rastelement vorgesehen ist, und wobei die Arretieraussparung rumpfnah ein dazu komplementäres weibliches Rastelement oder männliches Rastelement aufweist, und dass der Arretierhaken und der Aufnahmehaken einen Biegebereich aufweisen.

Der Biegebereich ist zweckmäßig so ausgebildet, dass durch seine elastische Biegbarkeit die Weite der Aufnahmeöffnung vergrößerbar ist, sodass der Arretierabsatz ganz in die Aufnahmeaussparung einfügbar ist und außerdem die Arretierkontur des Arretierhakens sich in die Formschlusskontur des Aufnahmehakens einfügt. Zwar werden die Arretierkontur und die Formschlusskontur auch gedrückt und verformt, aber je härter und spröder das Material des Rumpfes ist, desto geringer ist die elastische Verformung von Arretierkontur und Formschlusskontur und umso höher ist der Anteil an elastischer Verformung des Biegebereichs. Durch diese Gestaltung ist es nun möglich, selbst dann, wenn der Rumpf aus einem relativ harten und spröden Material gebildet ist, ein hohes Maß an Hinterschneidung für den Formschluss zwischen der Arretierkontur und Formschlusskontur vorzusehen.

Die Unterseite des Aufnahmehakens kann in einer Ebene liegen, die identisch ist mit der Ebene der Unterseite des Paneels.

Die Arretierkontur und die Formschlusskontur bilden zweckmäßig eine obere Verrastung, wobei die Arretierkontur ein weibliches oder ein männliches Rastelement aufweist, und wobei die Formschlusskontur ein zur Arretierkontur komplementäres weibliches Rastelement oder männliches Rastelement aufweist.

Jedes weibliche Rastelement weist eine Rastfläche auf, die zur Oberseite oder zur Unterseite des Paneels gerichtet ist. Dies bedeutet, dass die Flächennormale der Rastfläche zur entsprechenden Seite des Paneels gerichtet ist. Außerdem weist jedes männliche Rastelement eine Rastfläche auf, die zur jeweils anderen Seite des Paneels gerichtet ist. Dabei ist vorgesehen, dass die Rastfläche des weiblichen Rastelements zusammen mit der Rastfläche des männlichen Rastelements im verriegelten Zustand zweier Paneele einem Auseinanderbewegen verriegelter Paneele senkrecht zur Paneelebene entgegenwirken.

Vorzugsweise berührt die Rastfläche des weiblichen Rastelements im verriegelten Zustand zweier Paneele die Rastfläche des männlichen Rastelements. Auf diese Weise trägt die untere Verrastung zu einer festen Verriegelung senkrecht zur Ebene montierter Paneele bei.

Alternativ kann zwischen der Rastfläche des weiblichen Rastelements und der Rastfläche des zugeordneten männlichen Rastelements im verriegelten Zustand zweier Paneele eine Lücke vorgesehen sein. Dies kann das Montageverfahren vereinfachen, wenn beispielsweise eine relative Verschiebung zwischen den Querkanten vollzogen werden soll. Eine Lücke von wenigen Zehntelmillimetern erscheint ausreichend, bevorzugt ca. 0,1 mm.

Die Paneele sind günstigerweise so ausgelegt, dass während der Fügebewegung zuerst die obere Verrastung und anschließend die untere Verrastung vollständig zusammengefügt wird.

Der Biegebereich ist einfacherweise als Biegesteg ausgebildet. Er kann in dem von der Querkante des Paneels hervorstehenden Bereich des Hakenelements vorgesehen sein.

Die Horizontalverriegelungsflächen der Hakenprofile können gegenüber der Flächennormalen der Paneeloberseite um einen Winkel von 0° bis 45° geneigt sein. Der Neigungswinkel hängt im Wesentlich von der Konfiguration der Arretierkontur und der Formschlusskontur ab, insbesondere davon, wo das weibliche beziehungsweise männliche Rastelement angeordnet ist. Ein Neigungswinkel zwischen 7° und 25° hat sich als günstig erwiesen. Tendenziell kann eine geringere Neigung dann vorgesehen werden, wenn die Arretierkontur mit dem weiblichen Rastelement versehen ist und die Formschlusskontur das dazu passende männliche Rastelement aufweist. Je kleiner der Neigungswinkel, desto höher ist die Haltekraft gegen ein Auseinanderziehen in der Ebene der montierten Paneele sowie senkrecht zu den betreffenden Querkanten. Bevorzugt sind daher Neigungswinkel < 7° und besonders günstig ist ein Neigungswinkel von ca. 3°. Grundsätzlich ist auch ein negativer Neigungswinkel der beiden Horizontalverriegelungsflächen möglich. Dadurch würden diese eine Verriegelungswirkung senkrecht zur Paneelebene erzielen. Bei einer Vertauschung von weiblichem und männlichem Rastelement ist in der Regel ein größerer Neigungswinkel zweckmäßig, damit sich die Arretierkontur mit der Formschlusskontur miteinander verbinden lassen.

Hilfreich ist es, wenn der Hakenrand rumpffern eine Gleitschräge aufweist. Hierbei handelt es sich um eine Fläche, die gegenüber der Paneelebene geneigt ist, und die das Einfügen des Hakenrandes in die Arretieraussparung des Arretierhakens vereinfacht.

Der Arretierabsatz kann auf seiner rumpffernen Seite eine Gleitschräge aufweisen. Die Gleitschräge ist eine Fläche, die gegenüber der Paneelebene geneigt ist, und die das Einfügen des Arretierabsatzes in die Aufnahmeaussparung des Aufnahmehakens vereinfacht. Die Gleitschräge ist zweckmäßig so gestaltet, dass sie mit der Formschlusskontur zusammenwirkt. Sofern die Gleitschräge mit der Formschlusskontur in Kontakt kommt, gleitet die Formschlusskontur an ihr entlang. Dadurch können der Aufnahmehaken und der Arretierhaken parallel zur Paneelebene auseinander bewegt werden. Gleichzeitig kann die Horizontalverriegelungsfläche des Arretierhakens eine Kraft ausüben, welche gegen die Horizontalverriegelungsfläche des Aufnahmehakens drückt. Diese in die Horizontalverriegelungsfläche des Aufnahmehakens eingeleitete Kraft wird in den Aufnahmehaken übertragen, der sich dadurch elastisch verformen kann. Bei der weiteren Fügebewegung passiert die Arretierkontur die Formschlusskontur soweit, bis beide eine Position erreicht haben, in der sie formschlüssig ineinander passen. So kann eine geschlossene Fuge erreicht werden. Die Horizontalverriegelungsflächen der beiden Hakenprofile sind dann vorzugsweise aneinandergeschmiegt.

Vorteilhaft ist es, wenn ein Paar Schwenkprofile vorgesehen ist, nämlich ein Nutprofil mit Hinterschneidung einer Nutwand sowie ein Federprofil mit Hinterschneidung einer Federseite.

Dies hat den Vorteil, dass Paneele sich zweckmäßigerweise so montieren lassen, dass ein neues Paneel mit einem Schwenkprofil an das komplementäre Schwenkprofil eines schon montierten Paneels angesetzt und in dessen Ebene geschwenkt wird.

Außerdem vorteilhaft kann dabei gleichzeitig das Hakenprofil des neuen Paneels mit dem Hakenprofil eines Paneels in derselben Paneelreihe verriegelt werden. Zu dem Zweck wird der Arretierhaken des neuen Paneels in einer scherenartigen Bewegung im Wesentlichen in einer vertikalen Ebene abgesenkt und in den Aufnahmehaken eingefügt. Während der scherenartigen Bewegung ragt der Arretierabsatz zunächst nur an einem Ende der Paneelkante in die Aufnahmeöffnung hinein. Beim Fortschreiten der scherenartigen Fügebewegung kommt der Arretierabsatz Schritt für Schritt in die Aufnahmeöffnung. Wenn die Paneele sich schließlich in einer Ebene befinden sind die Arretierkontur und die Formschlusskontur exakt ineinandergepasst; die Querfugenflächen berühren sich und bilden eine geschlossene Fuge.

An der Oberseite kann eine Dekorschicht vorgesehen sein.

Es ist auch möglich, dass an der Oberseite eine transparente Deckschicht vorgesehen ist, durch welche der Rumpf oder die Dekorschicht sichtbar ist. Die transparente Deckschicht dient zum Schutz der darunterliegenden Schicht. Sie kann mit Mitteln versehen sein, welche den Verschleiß mindern, beispielsweise Korundpartikel, Glaspartikel, etc.

An seiner Unterseite kann eine Gegenzugschicht vorgesehen sein. Diese wirkt als Balance zu den an der Oberseite vorgesehenen Schichten, um einem Verzug des Paneels entgegenzuwirken.

Der Rumpf kann zumindest teilweise aus einem Holzwerkstoff bestehen, beispielsweise HDF, MDF, Spanplatte, OSB-Platte, etc.

Wenn der Rumpf zumindest teilweise aus einem Kunststoff besteht kann dies ein weicher und elastischer Kunststoff, wie ein thermoplastisches Polymer sein, beispielsweise Polyolefin, Polypropylen, Polyurethan oder Polyamid. Als weiches Kunststoffmaterial kann auch sogenanntes Weich-PVC vorgesehen sein. Hierbei handelt es sich um ein Polyvinylchlorid, das Weichmacher enthält. Grundsätzlich ist PVC jedoch ein amorphes Elastomer, das eine natürliche Härte und Sprödigkeit aufweist, die nur durch die Weichmacher vermindert werden kann. Es kann sich auch um einen Kunststoff mit natürlicher Härte und Sprödigkeit handeln, beispielsweise einem amorphen Elastomer, wie PVC, das gar keine oder nur eine geringe Menge Weichmacher enthält.

Ferner wird ein Paneel vorgeschlagen, umfassend einen Rumpf mit wenigstens einer Kunststoffschicht, komplementäre Verriegelungsmittel, die paarweise an sich gegenüberliegenden Paneelkanten vorgesehen sind, wenigstens ein Paar Verriegelungsmittel mit Hakenprofilen, nämlich einem Aufnahmehaken, und diesem gegenüberliegend einem Arretierhaken, mit der Maßgabe, dass der Aufnahmehaken rumpffern angeordnet einen Hakenrand und rumpfnäher angeordnet eine Aufnahmeaussparung aufweist, wobei die Aufnahmeaussparung zur Oberseite offen ist, dass der Arretierhaken mit einer rumpfnäher angeordneten und zur Unterseite offenen Arretieraussparung versehen ist und einen rumpffern angeordneten Arretierabsatz aufweist, der in vertikaler Fügerichtung in die Aufnahmeaussparung des Aufnahmehakens passt, dass der Arretierhaken eine rumpfferne Fugenfläche und gleichfalls rumpffern eine vertikal wirkende Arretierkontur aufweist, dass der Aufnahmehaken rumpfnäher eine Fugenfläche und gleichfalls rumpfnäher eine Formschlusskontur aufweist, die formschlüssig mit der rumpffernen Arretierkontur des Arretierhakens zusammenpasst, damit eine vertikale Verriegelung bewirkbar ist, dass der Arretierhaken rumpfnäher angeordnet eine Horizontalverriegelungsfläche an seinem Arretierabsatz aufweist, dass der Aufnahmehaken rumpffern angeordnet eine Horizontalverriegelungsfläche in der Aufnahmeaussparung aufweist, dass an dem Aufnahmehaken eine verengte Aufnahmeöffnung gebildet ist, durch welche der Arretierabsatz im Wesentlichen in vertikaler Fügerichtung in die Aufnahmeaussparung einfügbar ist, dass das freie Absatzende des Arretierabsatzes enger gestaltet ist als die Weite der Aufnahmeöffnung des Aufnahmehakens, wobei die rumpfferne Arretierkontur des Arretierhakens hinter die Ebene der Fugenfläche des Arretierhakens zurücksteht, dass die rumpfnähere Formschlusskontur des Aufnahmehakens zumindest teilweise über die Ebene der Fugenfläche des Aufnahmehakens hervorsteht, dass der Arretierabsatz und die Aufnahmeöffnung so gestaltet sind, dass das Absatzende während einer Fügebewegung ohne elastische Verformung der Hakenprofile zunächst soweit in die Aufnahmeöffnung hineinpasst, dass die Horizontalverriegelungsfläche des Arretierhakens mit einem Teil ihrer Fläche Kontakt mit der Horizontalverriegelungsfläche des Aufnahmehakens erhält, und dass der Aufnahmehaken einen Biegesteg aufweist, der so ausgebildet ist, dass durch seine elastische Biegbarkeit die Weite der Aufnahmeöffnung vergrößerbar ist, sodass der Arretierabsatz ganz in die Aufnahmeaussparung einfügbar ist und außerdem die Arretierkontur des Arretierhakens sich in die Formschlusskontur des Aufnahmehakens einfügt.

Verfahren zur gleichzeitigen Verriegelung eines neuen viereckigen Paneels, welches mit zwei Längskanten und zwei Querkanten versehen ist, an eine bereits aus identischen Paneelen montierte vorherige Paneelreihe sowie an ein bereits montiertes identisches Paneel derselben Paneelreihe, mit der Maßgabe, dass eine erste Längskante durch Schwenken des neuen Paneels in die Ebene der montierten Paneele formschlüssig mit der vorherigen Paneelreihe verbunden wird, wobei gleichzeitig eine erste Querkante des neuen Paneels durch eine scherenartige Bewegung in formschlüssigen Eingriff mit einer zweiten Querkante des montierten Paneels derselben Paneelreihe gebracht wird, mit der weiteren Maßgabe dass die erste Querkante der Paneele jeweils eine erste Querfugenfläche aufweist und die zweite Querkante der Paneele jeweils eine zweite Querfugenfläche aufweist, wobei die erste Querfugenfläche an demjenigen Ende, welches der ersten Längskante zugewandt ist, in Kontakt gebracht wird mit der zweiten Querfugenfläche des montierten Paneels derselben Paneelreihe, wobei die formschlüssige Verbindung der Längskante und der Querkante des neuen Paneels hergestellt wird, indem zwischen dem neuen Paneel und der vorherigen Paneelreihe ein Längsfugenspalt sowie ein Querfugenspalt erzeugt wird, dass die Keilspitze des Querfugenspalts in Richtung der vorherigen Paneelreihe zeigt und die Keilspitze des Längsfugenspalts in Richtung der freien zweiten Querkante des neuen Paneels zeigt, und dass das neue Paneel schließlich in die Ebene der montierten Paneele geschwenkt wird, wobei der formschlüssige Eingriff der Querkanten und Längskanten vollständig zusammengefügt und die keilförmigen Fugenspalte beseitigt werden. Durch den Querfugenspalt sind die Querkanten in ihrer Längsrichtung ein wenig verschoben/versetzt. Der Versatz entspricht dem Spaltmaß an der weitesten Stelle des Querfugenspalts. Um den Versatz zu beseitigen, müssen die Querkanten gegeneinander beweglich/verschiebbar sein. Günstig ist es dann, wenn wenigstens eine Verrastung, beispielsweise die untere Verrastung so gestaltet ist, dass zwischen Rastflächen eine kleine Lücke, z.B. 0,1 mm vorgesehen ist, um die Beweglichkeit der Querkanten zu erleichtern.

Der Längsfugenspalt kann erzeugt werden, indem das neue Paneel temporär aus seiner parallelen Ausrichtung zur vorherigen Paneelreihe gebracht und die Keilspitze des Längsfugenspalts am entfernten Ende der ersten Längskante des neuen Paneels erzeugt wird.

Der Längsfugenspalt kann andererseits erzeugt werden, indem das neue Paneel temporär aus seiner ebenen Form gebracht wird, in dem es aus seiner Paneelebene in Richtung seiner Oberseite aufgewölbt wird.

Nachfolgend ist die Erfindung in einer Zeichnung beispielhaft veranschaulicht und anhand mehrer Ausführungsbeispiele detailliert beschrieben. Es zeigen:
- Fig. 1: ein Ausführungsbeispiel für ein erstes Kantenpaar (Längskanten) mit Schwenkprofilen,
- Fig. 2a-2c: komplementäre Verriegelungsmittel eines zweiten Kantenpaares (Querkanten) und deren schrittweise Fügebewegung,
- Fig. 3a-3c: ein erstes alternatives Ausführungsbeispiel komplementärer Verriegelungsmittel eines zweiten Kantenpaares (Querkanten) und deren schrittweise Fügebewegung,
- Fig. 4a-4c: ein zweites alternatives Ausführungsbeispiel komplementärer Verriegelungsmittel eines zweiten Kantenpaares (Querkanten) und deren schrittweise Fügebewegung,
- Fig. 5a-5c: ein drittes alternatives Ausführungsbeispiel komplementärer Verriegelungsmittel eines zweiten Kantenpaares (Querkanten) und deren schrittweise Fügebewegung,
- Fig. 6a-6c: schematische Darstellungen eines Verriegelungsverfahrens zur Montage erfindungsgemäßer Paneele.

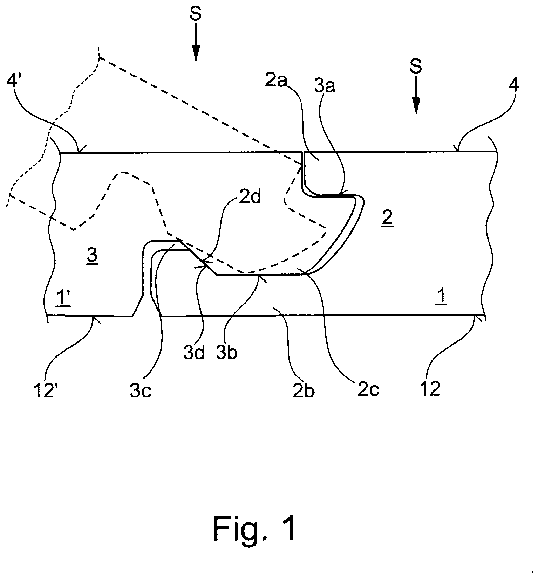

Fig. 1 zeigt ein erstes Kantenpaar eines erfindungsgemäßen Paneels 1 beziehungsweise 1', nämlich ein Längskantenpaar. Das Längskantenpaar weist komplementäre Schwenkprofile S auf. Als solche können alle im Stand der Technik bekannten formschlüssigen Profile vorgesehen werden, die sich durch schräges Ansetzen eines neuen Paneels an eine vorherige Paneelreihe und anschließendes Schwenken eines neuen Paneels 1' in die Ebene der montierten Paneele formschlüssig verbinden lassen.

Die komplementären Schwenkprofile S gemäß Fig. 1 umfassen ein Nutprofil 2 und ein Federprofil 3. Das Nutprofil 2 weist eine obere Nutwand 2a auf, die kürzer ist als die untere Nutwand 2b. Die untere Nutwand ist außerdem mit einer hinterschnittenen Ausnehmung 2c für das Federprofil 3 versehen. Die Ausnehmung 2c weist außerdem eine Horizontalverriegelungsfläche 2d auf. Das Federprofil 3 ist mit einer Federoberseite 3a und einer Federunterseite 3b versehen, die im Wesentlichen parallel zur Oberseite 4 des neuen Paneels 1' angeordnet ist. Die Federunterseite weist einen Hinterschnitt 3c auf und eine Horizontalverriegelungsfläche 3d, die mit der Horizontalverriegelungsfläche 2d der unteren Nutwand 2b zusammenwirkt. Die Schrägstellung des neuen Paneels 1' ist in Fig. 1 kenntlich gemacht durch die gestrichelt dargestellte Position des Federprofils 3'. Die Federunterseite wird auf die längere untere Nutwand 2b aufgelegt. Das neue Paneel 1' wird mit der Federspitze voran in das Nutprofil 2 bewegt und das neue Paneel 1' anschließend in die Ebene des/der montierten Paneele geschwenkt.

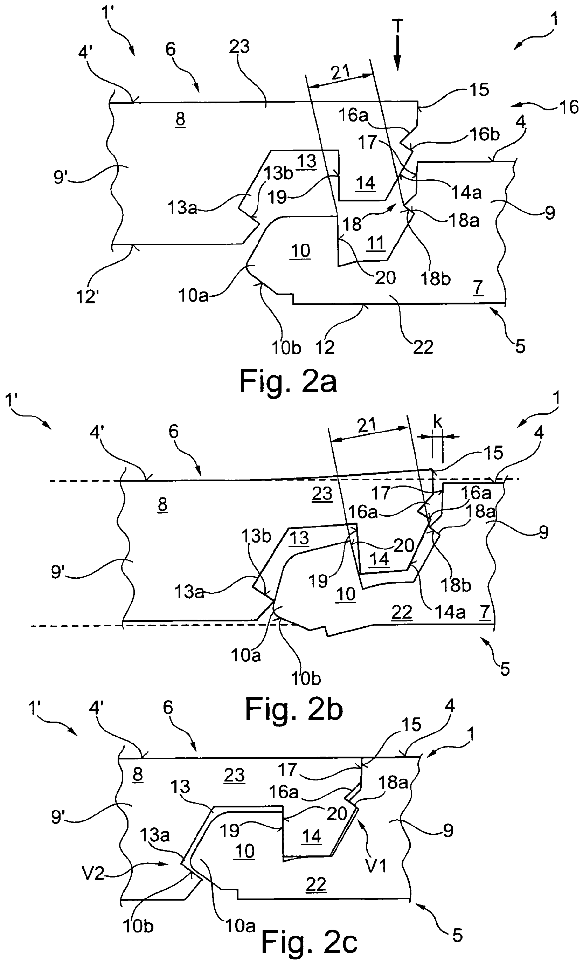

Die Figuren 2a bis 2c zeigen jeweils ausschnittsweise ein zweites Kantenpaar, nämlich Querkanten eines Paneels 1 beziehungsweise 1'. Die Paneele 1 und 1' sind identisch. Jedes einzelne Paneel weist an gegenüberliegenden Querkanten eines Kantenpaares komplementäre Profile 5 beziehungsweise 6 auf. Bei dem Paneel 1 weist daher die nicht dargestellte Kante identisch das Profil 5 des Paneels 1' auf und bei dem Paneel 1' weist die nicht dargestellte Kante identisch das Profil 6 des Paneels 1 auf.

Es sind auch Ausführungsformen viereckiger Paneele möglich, deren erstes Kantenpaar (Längskantenpaar) mit komplementären Profilen ausgebildet ist, die mit den Profilen des zweiten Kantenpaares (Querkantenpaar) identisch sind. Nachfolgend sind weitere Beispiele für Querkantenpaare beschrieben.

Die Serie der Figuren 2a bis 2c verdeutlicht in mehreren Schritten den prinzipiellen Ablauf der Fügebewegung zwecks Verbindung und Verriegelung der Paneele 1 und 1'.

Die komplementären Profile 5 und 6 eines jeden Paneels 1 beziehungsweise 1' bilden komplementäre Verriegelungsmittel in Form von Hakenprofilen H. Das Hakenprofil des Paneels 1 bildet einen Aufnahmehaken 7 und das Hakenprofil des Profils 1' einen Arretierhaken 8, der in den Aufnahmehaken passt, wobei die beiden Hakenprofile so gestaltet sind, dass eine Arretierung erfolgt, die einer Umkehrung der Fügebewegung entgegenwirkt. Die Paneele 1 und 1' können so nach erfolgter Verriegelung nicht senkrecht zur Ebene montierter Paneele wieder voneinander gelöst werden.

Jedes Paneel 1 beziehungsweise 1' umfasst einen Rumpf 9 beziehungsweise 9', an dem die erwähnten komplementären Verriegelungsmittel angeordnet sind. Die Oberseite 4 der Paneele bildet eine Nutzoberfläche.

An dem Aufnahmehaken 7 ist rumpffern ein Hakenrand 10 und rumpfnäher eine Aufnahmeaussparung 11 vorgesehen. Die Aufnahmeaussparung 11 ist zur Oberseite 4 offen.

Der Arretierhaken 8 ist mit einer rumpfnäher angeordneten und zur Unterseite 12 offenen Arretieraussparung 13 versehen und weist rumpffern einen Arretierabsatz 14 auf. Der Arretierabsatz passt in senkrechter Fügerichtung T in die Aufnahmeaussparung 11 des Aufnahmehakens 7. Weiterhin weist der Arretierhaken 8 eine rumpfferne Querfugenfläche 15 und gleichfalls rumpffern eine vertikal verriegelnd wirkende Arretierkontur 16 auf. Der Aufnahmehaken 7 weist rumpfnah eine Querfugenfläche 17 und gleichfalls rumpfnah eine Form-schlusskontur 18 auf, die formschlüssig mit der Arretierkontur 16 des Arretierhakens 8 zusammenpasst. Auf diese Weise ist eine obere Verrastung V1 gebildet, mit der eine Verriegelung senkrecht zur Paneelebene bewirkbar ist.

Außerdem weist der Arretierhaken 8 rumpfnah angeordnet eine Horizontalverriegelungsfläche 19 auf, die an seinem Arretierabsatz 14 angeordnet ist. Passend dazu weist der Aufnahmehaken 7, rumpffern in der Aufnahmeaussparung 11 angeordnet, eine Horizontalverriegelungsfläche 20 auf, die mit der Horizontalverriegelungsfläche 19 des Arretierhakens 8 zusammenwirkt.

Der Aufnahmehaken 7 ist an seiner Aufnahmeaussparung 11 mit einer verengten Aufnahmeöffnung 21 versehen. Der Arretierabsatz 14 ist im Wesentlichen in senkrechter Fügerichtung T in die Aufnahmeaussparung 11 einfügbar, dass heißt in einer Ebene senkrecht zur Ebene der verriegelten Paneele.

Gemäß den Figuren 2a bis 2c ist das Paneel 1 mit dem Aufnahmehaken 7 auf einem festen Untergrund (nicht dargestellt) angeordnet. Der Arretierabsatz 14 des Paneels 1' wird senkrecht zur Paneelebene (vertikal) abgesenkt. Die rumpfferne Arretierkontur 16 des Arretierhakens 8 weist ein weibliches Rastelement 16a (Vertiefung) auf. Das weibliche Rastelement 16a weist eine Rastfläche 16b auf, die zur Oberseite 4' des Paneels 1' gerichtet ist, und die hinter die Ebene der Querfugenfläche 15 des Arretierhakens 8 zurücksteht. Die rumpfnahe Formschlusskontur 18 des Aufnahmehakens 7 ist so gestaltet, dass sie ein männliches Rastelement 18a aufweist, das eine Rastfläche 18b aufweist, die zur Unterseite 12 des Paneels 1 gerichtet ist, die über die Ebene der Querfugenfläche 17 des Aufnahmehakens 7 hervorsteht, und die im verriegelten Zustand das weibliche Rastelement 16a des Arretierhakens 8 hintergreift. Im Übrigen sind Arretierabsatz 14 und Aufnahmeöffnung 21 so gestaltet, dass das freie Absatzende des Arretierabsatzes 14 während des Beginns der Fügebewegung zunächst ohne nennenswerte elastische Verformung der Hakenprofile in die Aufnahmeöffnung 21 hineinpasst. Dabei kommt die Horizontalverriegelungsfläche 19 des Arretierhakens 8 mit einem Teil ihrer Fläche in Kontakt mit der Horizontalverriegelungsfläche 20 des Aufnahmehakens 7.

An dem Aufnahmehaken 7 ist ein Biegesteg 22 ausgebildet, der am Besten in Fig. 2b zu erkennen ist. Der Biegesteg 22 ist so gestaltet, dass durch seine elastische Biegbarkeit die Weite der Aufnahmeöffnung 21 vergrößerbar ist, sodass der Arretierabsatz 14 problemlos in die Aufnahmeaussparung 11 einfügbar ist. Außerdem ist wegen der Biegbarkeit des Biegestegs 22 die Arretierkontur 16 des Arretierhakens 8 sehr einfach in die Formschlusskontur 18 des Aufnahmehakens 7 einfügbar.

Die Hakenprofile sind zu Beginn des Fügeweges in Eingriff zu bringen, ohne an der Engriffsstelle bereits elastisch verformt zu werden. Erst bei weiterem Fortschritt der Fügebewegung kommen die hinterschnittenen Bereiche, nämlich das weibliche Rastelement 16a der Arretierkontur und das männliche Rastelement 18a Formschlusskontur an der Eingriffsstelle in Kontakt. Dieser Kontakt bewirkt jedoch eine elastische Verformung, die im Wesentlichen an einer anderen Stelle stattfindet, nämlich an dem dafür vorgesehenen Biegesteg 22. Zwar werden die Arretierkontur 16 und die Formschlusskontur 18 auch gedrückt und verformt, aber je härter und spröder das Material des Rumpfes 9/9' ist, desto geringer ist die elastische Verformung von Arretierkontur 16 und Formschlusskontur 18 und umso höher ist der Anteil der elastischen Verformung des Biegestegs 22.

Das weibliche Rastelement 16a des Arretierhakens 8 kann tiefer gestaltet sein und das männliche Rastelement 18a des Aufnahmehakens 7 weiter von der Querfugenfläche 17 des Aufnahmehakens 7 hervorstehen, als bei einem Paneel ohne Biegesteg 22. Das erhöhte Maß an Hinterschneidung verbessert die Festigkeit gegen Auseinanderbewegen montierter Paneele senkrecht zur Paneelebene. Trotz der verbesserten Festigkeit können die Arretierkontur 16 und Formschlusskontur 18 problemlos in Eingriff gebracht werden, weil der Biegesteg 22 eine Aufweitung der Aufnahmeöffnung 21 ermöglicht. Die Arretierkontur 16 und Formschlusskontur 18 können so ohne starke eigene Verformung aneinander vorbei bewegt werden, bis sie sich in formschlüssigem Eingriff befinden und ihre Verriegelungswirkung entfalten.

In Fig. 2b ist dargestellt, dass eine schräge Fläche rumpffern an dem Arretierabsatz 14 vorgesehen ist, die eine Gleitschräge 14a bildet. Die Gleitschräge berührt das männliche Rastelement 18a der Formschlusskontur 18 des Aufnahmehakens 7. Während der scherenartigen Fügebewegung des Arretierhakens 8 wird dadurch eine horizontale Bewegung überlagert, welche die Paneele 1/1' auseinander bewegt, sodass sich zwischen den Querfugenflächen 15/17 ein Abstand bildet. Gleichzeitig übt die Horizontalverriegelungsfläche 19 des Arretierhakens 8 eine Kraft aus, die gegen die Horizontalverriegelungsfläche 20 des Aufnahmehakens 7 drückt. Die Kraft, die auf die Horizontalverriegelungsfläche 20 des Aufnahmehakens wirkt, wird in den Biegesteg 22 des Aufnahmehakens übertragen, der dadurch elastisch gebogen wird.

Außerdem zeigt Fig. 2b, dass der Aufnahmehaken 7 an seinem Hakenrand 10 ein männliches Rastelement 10a aufweist und die Arretieraussparung 13 mit einem weiblichen Rastelement 13a versehen ist, die mit dem männliches Rastelement 10a zusammenwirkt und im montierten Zustand der Paneele ebenfalls einem Auseinanderbewegen montierter Paneele senkrecht zur Paneelebene entgegenwirkt. Durch diese Gestaltung ist eine untere Verrastung V2 gebildet, welche die obere Verrastung V1 unterstützt. Das weibliche Rastelement 13a weist zu diesem Zweck eine Rastfläche 13b auf, die zur Oberseite 4' des Paneels 1' gerichtet ist, während das männliche Rastelement 10a eine Rastfläche 10b aufweist, die zur Unterseite 12 des Paneels 1 gerichtet ist und mit der weiblichen Rastfläche 13b zusammenwirkt.

Der Arretierhaken 8 ist so ausgelegt, dass beim Fügevorgang die Arretieraussparung 13 des Arretierhakens 8 aufgeweitet wird und dadurch das Einfügen des Hakenrandes 10 mit dem männlichen Rastelement 10a in die Arretieraussparung erleichtert wird, die mit dem weiblichen Rastelement 13a versehen ist. Zu diesem Zweck ist am Arretierhaken ein Biegesteg 23 vorgesehen. Wenn von außen eine Kraft auf die Horizontalverriegelungsfläche 19 des Arretierhakens 8 einwirkt, wie in Fig. 2b durch die Horizontalverriegelungsfläche 20 des Aufnahmehakens 7, dann wird mit dieser Kraft eine Biegung des Biegestegs 23 erzeugt, welche in der Aufweitung der Arretieraussparung 13 resultiert und die Montage erleichtert.

Bei der weiteren Fügebewegung passiert die weiteste Stelle des Arretierabsatzes 14 die aufgeweitete Aufnahmeöffnung 21 der Aufnahmeaussparung 11. Anschließend nimmt die Biegung des Biegestegs 22 ab, und die Aufnahmeöffnung 21 verengt sich wieder. Die im Abstand k befindlichen Querfugenflächen 15/17 der Paneele werden durch die Biegespannung des Biegestegs 22 aufeinander zu gedrückt. Gleichzeitig nimmt die Biegung des Biegestegs 23 ab und auch der Hakenrand 10 gelangt formschlüssig in die Arretieraussparung 13 und die Paneele werden ebenfalls durch die Biegespannung des Biegestegs 23 aufeinander zu gedrückt. Die Paneele können derart aufeinander zu gedrückt werden, dass sich eine geschlossene Querfuge ergibt.

In Fig. 2c haben die Arretierkontur 16 und die Formschlusskontur 18 eine Position erreicht, in der sie formschlüssig ineinander passen. Die Hakenprofile H können so ausgelegt sein, dass ein Rest Biegespannung der Biegesteg 22 und 23 erhalten bleibt und über die Horizontalverriegelungsfläche 20 des Aufnahmehakens 7 eine elastische Kraft (Federkraft) ausgeübt wird, welche die Querfugenfläche 15 des Arretierhakens 8 permanent in Richtung der Querfugenfläche 17 des Aufnahmehakens 7 vorspannt. So kann dauerhaft eine geschlossene Querfuge erreicht werden. In Fig. 2c sind die Horizontalverriegelungsflächen 19, 20 der beiden Hakenprofile H aneinandergeschmiegt und üben keine permanente Vorspannung aus.

Die obere Verrastung V1 und die untere Verrastung V2 sind so aufeinander abgestimmt, dass zuerst die obere Verrastung in ihre formschlüssige Position gelangt und anschließend die untere Verrastung in ihre formschlüssige Position gelangt. Zu diesem Zweck können die Biegeeigenschaften (Biegesteifigkeiten) des Aufnahmehakens 7 und des Arretierhakens 8 entsprechend aufeinander abgestimmt werden.

Insbesondere die Auslegung der Biegesteifigkeit des Aufnahmehakens 7 bedarf besonderer Gründlichkeit. Wenn der Aufnahmehaken beispielsweise in eine weiche trittschalldämmende Unterlage gebogen wird, die bei einer von der Oberseite 4 des Paneels übertragenen Druckkraft kaum einen Gegenhalt bietet, muss die elastische Biegung des Biegestegs 22 eine ausreichende Rückstellkraft erzeugen, um den Formschluss der unteren Verrastung V2 zu gewährleisten.

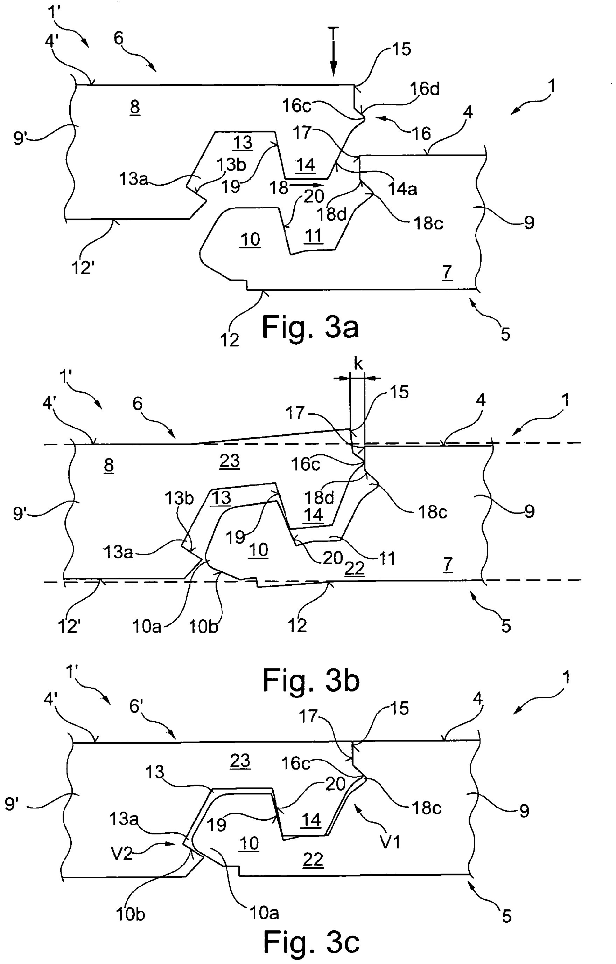

Fig. 3a-3c zeigen eine erste Alternative zu dem Ausführungsbeispiel gemäß Fig. 2a-2c. Für gleiche technische Merkmale sind die gleichen Bezugszeichen angegeben. Der Unterschied besteht in einer abgewandelten Gestaltung der oberen Verrastung VI. Die Arretierkontur 16 des Arretierhakens ist nämlich mit einem männlichen Rastelement 16c versehen. Dieses weist eine Rastfläche 16d auf, die nunmehr zur Oberseite 4' des Paneels 1' gerichtet ist. An der Formschlusskontur 18 des Aufnahmehakens 7 ist ein dazu passendes weibliches Rastelement 18c mit einer Rastfläche 18d, welche nunmehr zur Unterseite 12 des Paneels 1 gerichtet ist. Zum Beginn der Fügebewegung weist die Querfugenfläche 15 des Arretierhakens einen größeren Abstand von der Querfugenfläche 17 auf als beim Ausführungsbeispiel Fig. 2a-2c. Weil nun die Spitze des männlichen Rastelements 16c an der Querfugenfläche 17 anstößt, hat der Arretierabsatz 14 insgesamt einen größeren Abstand von dieser Querfugenfläche 17. Damit der Arretierabsatz 14 dennoch so in die Aufnahmeaussparung 11 passt, dass die Horizontalverriegelungsflächen 19 und 20 ansatzweise in Kontakt gebracht werden können, ist die Horizontalverriegelungsfläche 20 stärker geneigt als in dem Ausführungsbeispiel der Fig. 2a-2c. Die Neigungen der Horizontalverriegelungsflächen 19/20 sind aneinander angepasst.

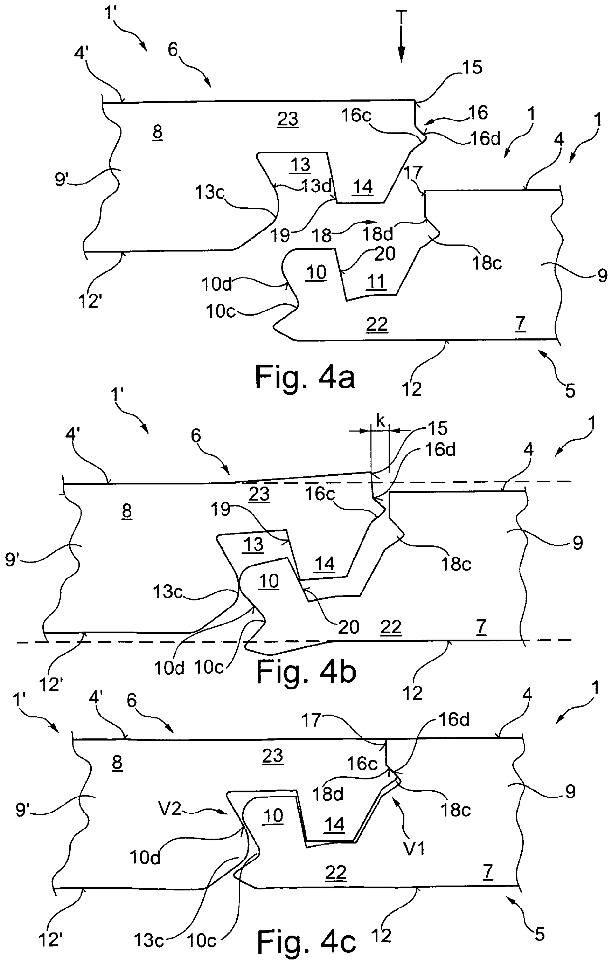

Fig. 4a-4c stellen ein Ausführungsbeispiel dar, bei dem die obere Verrastung V1 identisch gestaltet ist, wie in den Figs. 3a-3c. Die obere Verrastung V1 weist die gleiche Funktion auf, wie in dem vorherigen Ausführungsbeispiel beschrieben, so dass auf die dortige Beschreibung verwiesen wird. Im Bereich der unteren Verrastung V2 ist eine geänderte Gestaltung vorgesehen. Der Hakenrand 10 des Aufnahmehakens 7 ist nämlich mit einem weiblichen Rastelement 10c versehen, das eine Rastfläche 10d aufweist. Diese Rastfläche 10d ist dabei zur Unterseite 12 des Paneels 1 gerichtet. Die Arretieraussparung 13 des Arretierhakens 8 weist dazu passend ein männliches Rastelement 13c auf. Dieses ist mit einer Rastfläche 13d versehen, die zur Oberseite 4' des Paneels 1' gerichtet ist.

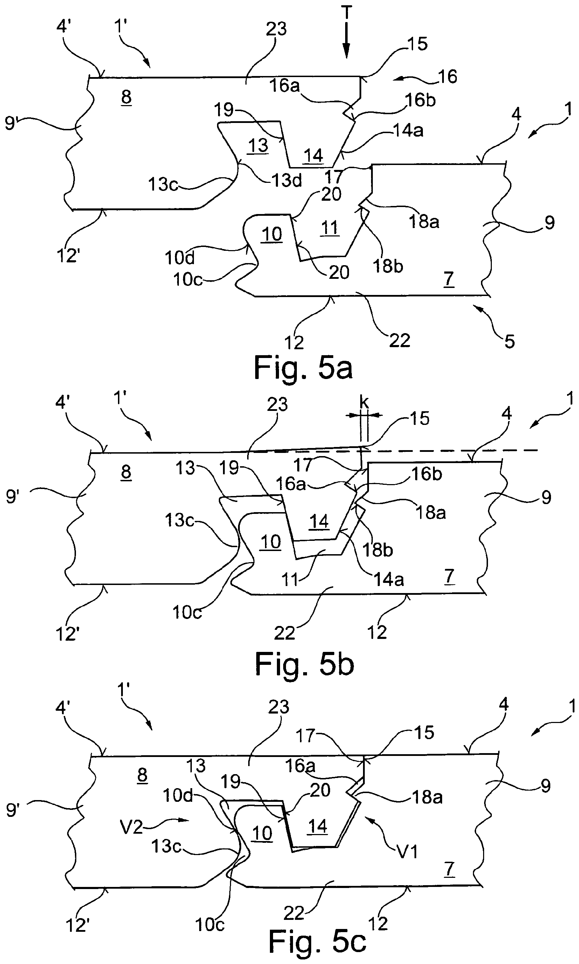

Fig. 5a-5c zeigen ein Ausführungsbeispiel, dessen obere Verrastung V1 eine Arretierkontur aufweist, die den Fig. 2a-2c entspricht, wobei aber die Horizontalverriegelungsfläche 19 einen größeren Neigungswinkel aufweist. Die untere Verrastung V2 ist identisch mit derjenigen in Figs. 4a-4c. Um diese Gestaltung der untere Verrastung V2 einfacher miteinander verbinden zu können, ist der größere Neigungswinkel der Horizontalverriegelungsfläche 19 zweckdienlich. Der Neigungswinkel der Horizontalverriegelungsfläche 20 ist an den Neigungswinkel der Horizontalverriegelungsfläche 19 angepasst.

Zur Montage eines neuen Paneels 24 wird ein Verfahren angewandt, das zur Verriegelung eines neuen viereckigen Paneels, mit zwei Längskanten und zwei Querkanten versehen ist, an eine bereits aus identischen Paneelen montierte vorherige Paneelreihe P2 sowie gleichzeitigen zur Verriegelung an ein bereits montiertes identisches Paneel 25 derselben Paneelreihe P3.

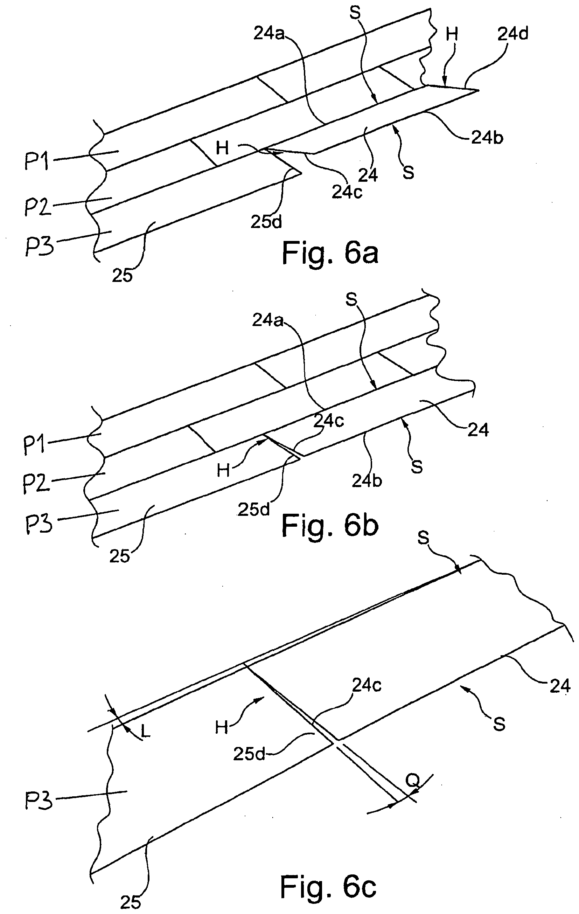

Fig. 6a zeigt die Herstellung einer montierten Fläche aus erfindungsgemäßen Paneelen. Dargestellt sind ausschnittsweise die Paneelreihen P1-P3. Das neue viereckige Paneel 24 ist nur schematisch gezeigt. Bei den verwendeten Paneelen handelt es sich um ein Ausführungsbeispiel mit einem Paar Längskanten 24a/24b, das mit komplementären formschlüssigen Schwenkprofilen S versehen ist und mit einem Paar Querkanten 24c/24d, welche komplementäre Hakenprofile H aufweisen. Die Schwenkprofile S dienen dazu, Paneele unterschiedlicher Paneelreihen miteinander zu verbinden. Die Hakenprofile H dienen bei diesem Ausführungsbeispiel dazu, Paneele derselben Paneelreihe P3 miteinander zu verbinden. Die Hakenprofile H des Querkantenpaares können so ausgebildet sein, wie in einem der Ausführungsbeispiele gemäß den Figuren 2a bis 5c.

Fig. 6a zeigt, wie in der vordersten Paneelreihe P3 ein neues Paneel 24 montiert wird, das sowohl mit der vorherigen Paneelreihe P2 als auch mit einer Querkante 25d eines benachbarten Paneels 25 derselben Paneelreihe P3 verriegelt werden soll. Das neue Paneel 24 ist schräg in Bezug auf die Ebene der montierten Paneele und mit einem seiner Schwenkprofile S an die vordere Paneelreihe P2 angesetzt. Es wird anschließend durch Schwenken in die Ebene der montierten Paneele mit der vorherigen Paneelreihe P2 verriegelt. Gleichzeitig verriegelt dabei auch das an der Querkante 24c vorgesehene Hakenprofil (Arretierhaken 8) des neuen Paneels 24 mit dem an der Querkante 25d vorgesehene Hakenprofil (Aufnahmehaken 7) des Paneels 25 derselben Paneelreihe P3. Der Arretierhaken 8 wird, während das neue Paneel 24 in die Ebene der montierten Paneele geschwenkt wird, gleichzeitig in einer scherenartigen Fügebewegung mit dem Aufnahmehaken 7 in Eingriff gebracht.

Die formschlüssige Verbindung der Längskante 24a und der Querkante 24c des neuen Paneels 24 dabei wird hergestellt, indem zwischen dem neuen Paneel 24 und der vorherigen Paneelreihe P2 ein Längsfugenspalt L sowie ein Querfugenspalt Q zwischen der Querkante 25d des Paneels 25 und der Querkante 24c des neuen Paneels 24 erzeugt wird. Die Keilspitze des Querfugenspalts Q zeigt in Richtung der vorherigen Paneelreihe P2 und die Keilspitze des Längsfugenspalts L in Richtung der freien zweiten Querkante 24d des neuen Paneels 24. Wenn das neue Paneel 24 schließlich in die Ebene der montierten Paneele geschwenkt wird, wird der formschlüssige Eingriff der Querkanten 24c/25d und der Längskante 24a mit der vorherigen Paneelreihe P2 vollständig zusammengefügt hergestellt sowie die keilförmigen Fugenspalte Q und L beseitigt.

Der Längsfugenspalt L wird erzeugt, indem das neue Paneel 24 temporär aus seiner parallelen Ausrichtung zur vorherigen Paneelreihe P2 gebracht und die Keilspitze des Längsfugenspalts L am entfernten Ende der ersten Längskante 24a des neuen Paneels 24 erzeugt wird.

### Bezugszeichenliste

- 1: Paneel
- 1': Paneel
- 2: Nutprofil
- 2a: obere Nutwand
- 2b: untere Nutwand
- 2c: Ausnehmung
- 2d: Horizontalverriegelungsfläche
- 3: Federprofil
- 3a: Federoberseite
- 3b: Federunterseite
- 3c: Hinterschnitt
- 3d: Horizontalverriegelungsfläche
- 4: Oberseite
- 4': Oberseite
- 5: Profil
- 6: Profil
- 7: Aufnahmehaken
- 8: Arretierhaken
- 9: Rumpf
- 9': Rumpf
- 10: Hakenrand
- 10a: männliches Rastelement
- 10b: Rastfläche
- 10c: weibliches Rastelement
- 11: Aufnahmeaussparung
- 12: Unterseite
- 12': Unterseite
- 13: Arretieraussparung
- 13a: weibliches Rastelement
- 13b: Rastfläche
- 13c: männliches Rastelement
- 14: Arretierabsatz
- 14a: Gleitschräge
- 15: Querfugenfläche (Arretierhaken)
- 16: Arretierkontur
- 16a: weibliches Rastelement
- 16b: Rastfläche
- 16c: männliches Rastelement
- 16d: Rastfläche
- 17: Querfugenfläche (Aufnahmehaken)
- 18: Formschlusskontur
- 18a: männliches Rastelement
- 18b: Rastfläche
- 18c: weibliches Rastelement
- 18d: Rastfläche
- 19: Horizontalverriegelungsfläche (Arretierhaken)
- 20: Horizontalverriegelungsfläche (Aufnahmehaken)
- 21: Aufnahmeöffnung
- 22: Biegesteg (Aufnahmehaken)
- 23: Biegesteg (Arretierhaken)
- 24: neues Paneel
- 24a: Längskante
- 24b: Längskante
- 24c: Querkante
- 24d: Querkante
- 25: Paneel
- 25d: Querkante
- H: Hakenprofil
- L: Längsfugenspalt
- P1: Paneelreihe
- P2: Paneelreihe
- P3: Paneelreihe
- Q: Querfugenspalt
- S: Schwenkprofil
- T: Fügerichtung
- V1: obere Verrastung
- V2: untere Verrastung

## Patentansprüche

1. Paneel (1, 1'), umfassend eine Oberseite (4, 4'), eine Unterseite (12, 12', einen Rumpf (9, 9'), komplementäre Verriegelungsmittel, die paarweise an sich gegenüberliegenden Paneelkanten vorgesehen sind, wenigstens ein Paar Verriegelungsmittel mit Hakenprofilen (H), nämlich einem Aufnahmehaken (7), und diesem gegenüberliegend einem Arretierhaken (8), mit der Maßgabe, dass der Aufnahmehaken rumpffern angeordnet einen Hakenrand (10) und rumpfnäher angeordnet eine Aufnahmeaussparung (11) aufweist, wobei die Aufnahmeaussparung zur Oberseite offen ist, dass der Arretierhaken mit einer rumpfnäher angeordneten und zur Unterseite offenen Arretieraussparung (13) versehen ist und einen rumpffern angeordneten Arretierabsatz (14) aufweist, der in senkrechter Fügerichtung (T) in die Aufnahmeaussparung (11) des Aufnahmehakens (7) passt, dass der Arretierhaken (8) eine rumpfferne Querfugenfläche (15) und gleichfalls rumpffern eine vertikal wirkende Arretierkontur (16) aufweist, dass der Aufnahmehaken (7) rumpfnäher eine Querfugenfläche (17) und gleichfalls rumpfnäher eine Formschlusskontur (18) aufweist, die formschlüssig mit der rumpffernen Arretierkontur (16) des Arretierhakens zusammenpasst, damit eine Verriegelung senkrecht zur Ebene montierter Paneele bewirkbar ist, dass der Arretierhaken (8) rumpfnäher angeordnet eine Horizontalverriegelungsfläche (19) an seinem Arretierabsatz (14) aufweist, dass der Aufnahmehaken (7) rumpffern angeordnet eine Horizontalverriegelungsfläche (20) in der Aufnahmeaussparung (11) aufweist, dass an dem Aufnahmehaken (7) eine Aufnahmeöffnung (21) gebildet ist, durch welche der Arretierabsatz (14) im Wesentlichen in Fügerichtung (T) in die Aufnahmeaussparung (11) einfügbar ist, wobei der Arretierabsatz (14) und die Aufnahmeöffnung (21) so gestaltet sind, dass das Absatzende während einer Fügebewegung ohne elastische Verformung der Hakenprofile (H) zunächst soweit in die Aufnahmeöffnung (21) hineinpasst, dass die Horizontalverriegelungsfläche (19) des Arretierhakens (8) mit einem Teil ihrer Fläche Kontakt mit der Horizontalverriegelungsfläche (20) des Aufnahmehakens (7) erhält; wobei der Hakenrand (10) des Aufnahmehakens (7) und die Arretieraussparung (13) des Arretierhakens (8) eine untere Verrastung (V2) bilden, und wobei der Arretierhaken (8) einen Biegebereich aufweist, **dadurch gekennzeichnet, dass** rumpffern an dem Hakenrand des Aufnahmehakens ein männliches Rastelement (10a) oder weibliches Rastelement (10c) vorgesehen ist, wobei die Arretieraussparung (13) rumpfnah ein dazu komplementäres weibliches Rastelement (13a) oder männliches Rastelement (13c) aufweist, und dass auch der Aufnahmehaken (7) einen Biegebereich aufweist.

2. Paneel nach Anspruch 1, **dadurch gekennzeichnet, dass** die Unterseite des Aufnahmehakens (7) in einer Ebene liegt, die identisch ist mit der Ebene der Unterseite (12, 12') des Paneels.

3. Paneel nach Anspruch 1 oder 2, **dadurch gekennzeichnet, dass** die Arretierkontur (16) und die Formschlusskontur (18) eine obere Verrastung (V1) bilden, wobei die Arretierkontur ein weibliches Rastelement (16a) oder ein männliches Rastelement (16c) aufweist, und wobei die Formschlusskontur (18) ein zur Arretierkontur komplementäres männliches Rastelement (18a) oder weibliches Rastelement (18c) aufweist.

4. Paneel nach Anspruch 3, **dadurch gekennzeichnet, dass** jedes weibliche Rastelement eine Rastfläche (13b, 16b, 10d, 18d) aufweist, die zur Oberseite (4, 4') oder Unterseite (12, 12') des Paneels gerichtet ist, dass jedes männliche Rastelement eine komplementäre Rastfläche (10b, 13d, 16d, 18b) aufweist, die zur jeweils anderen Seite des Paneels gerichtet ist, und dass die Rastfläche des weiblichen Rastelements zusammen mit der Rastfläche des männlichen Rastelements im verriegelt Zustand zweier Paneele einem Auseinanderbewegen verriegelter Paneele senkrecht zur Paneelebene entgegenwirken.

5. Paneel nach Anspruch 4, **dadurch gekennzeichnet, dass** die Rastfläche (13b, 16b, 10d, 18d) des weiblichen Rastelements im verriegelten Zustand zweier Paneele die Rastfläche (10b, 13d, 16d, 18b) des männlichen Rastelements berührt.

6. Paneel nach Anspruch 4, **dadurch gekennzeichnet, dass** zwischen der Rastfläche des weiblichen Rastelements und der Rastfläche des zugeordneten männlichen Rastelements im verriegelten Zustand zweier Paneele eine Lücke vorgesehen ist.

7. Paneel nach einem der Ansprüche 1 bis 6, **dadurch gekennzeichnet, dass** während der Fügebewegung zuerst die obere Verrastung (V1) und anschließend die untere Verrastung (V2) vollständig zusammengefügt wird.

8. Paneel nach Anspruch 7, **dadurch gekennzeichnet, dass** der Biegebereich als Biegesteg (22, 23) ausgebildet ist.

9. Paneel nach einem der Ansprüche 1 bis 8, **dadurch gekennzeichnet, dass** die Horizontalverriegelungsflächen (19, 20) der Hakenprofile (H) gegenüber der Flächennormalen der Oberseite (4, 4') um einen Winkel von 0° bis 25° geneigt sind und im verriegelten Zustand zweier Paneele im Wesentlichen parallel zueinander angeordnet sind.

10. Paneel nach einem der Ansprüche 1 bis 9, **dadurch gekennzeichnet, dass** der Hakenrand (10) rumpffern eine Gleitschräge aufweist.

11. Paneel nach einem der Ansprüche 1 bis 10, **dadurch gekennzeichnet, dass** der Arretierabsatz (14) auf seiner rumpffernen Seite eine Gleitschräge (14a) aufweist.

12. Paneel nach einem der Ansprüche 1 bis 11, **dadurch gekennzeichnet, dass** ein Paar Schwenkprofile (S) vorgesehen sind, nämlich ein Nutprofil (2) mit Hinterschneidung (2c) einer Nutwand (2b) sowie ein Federprofil (3) mit Hinterschneidung (3c) einer Federseite (3b).

13. Paneel nach einem der Ansprüche 1 bis 12, **dadurch gekennzeichnet, dass** an der Oberseite (4, 4') eine Dekorschicht vorgesehen ist.

14. Paneel nach einem der Ansprüche 1 bis 13, **dadurch gekennzeichnet, dass** an der Oberseite (4, 4') eine transparente Deckschicht vorgesehen ist, durch welche der Rumpf (9, 9') oder die Dekorschicht sichtbar ist.

15. Paneel nach einem der Ansprüche 1 bis 14, **dadurch gekennzeichnet, dass** an seiner Unterseite (12, 12') eine Gegenzugschicht vorgesehen ist.

16. Paneel nach einem der Ansprüche 1 bis 15, **dadurch gekennzeichnet, dass** der Rumpf (9, 9') zumindest teilweise aus einem Holzwerkstoff besteht.

17. Paneel nach einem der Ansprüche 1 bis 16, **dadurch gekennzeichnet, dass** der Rumpf (9, 9') zumindest teilweise aus einem Kunststoff besteht.

18. Verfahren zur gleichzeitigen Verriegelung eines neuen viereckigen Paneels (24) gemäß einem der Ansprüche 1 bis 17, welches mit zwei Längskanten (24a, 24b) und zwei Querkanten (24c, 24d) versehen ist, an eine bereits aus identischen Paneelen montierte vorherige Paneelreihe (P2) sowie an ein bereits montiertes identisches Paneel (25) derselben Paneelreihe (P2), mit der Maßgabe, dass eine erste Längskante (24a) durch Schwenken des neuen Paneels (24) in die Ebene der montierten Paneele formschlüssig mit der vorherigen Paneelreihe (P2) verbunden wird, wobei gleichzeitig eine erste Querkante (24c) des neuen Paneels (24) durch eine scherenartige Bewegung in formschlüssigen Eingriff mit einer zweiten Querkante (25d) des montierten Paneels (25) derselben Paneelreihe (P2) gebracht wird, mit der weiteren Maßgabe dass die erste Querkante der Paneele jeweils eine erste Querfugenfläche (15) aufweist und die zweite Querkante der Paneele jeweils eine zweite Querfugenfläche (17) aufweist, wobei die erste Querfugenfläche (15) an demjenigen Ende, welches der ersten Längskante zugewandt ist, in Kontakt gebracht wird mit der zweiten Querfugenfläche (17) des montierten Paneels (25) derselben Paneelreihe (P2), wobei die formschlüssige Verbindung der Längskante und der Querkante des neuen Paneels hergestellt wird, indem zwischen dem neuen Paneel (24) und der vorherigen Paneelreihe (P2) ein Längsfugenspalt (L) sowie ein Querfugenspalt (Q) erzeugt wird, dass die Keilspitze des Querfugenspalts (Q) in Richtung der vorherigen Paneelreihe (P2) zeigt und die Keilspitze des Längsfugenspalts (L) in Richtung der freien zweiten Querkante (24d) des neuen Paneels (24) zeigt, und dass das neue Paneel schließlich in die Ebene der montierten Paneele geschwenkt wird, wobei der formschlüssige Eingriff der Querkanten und Längskanten vollständig zusammengefügt und die keilförmigen Fugenspalte (L, Q) beseitigt werden.

19. Verfahren nach Anspruch 18, **dadurch gekennzeichnet, dass** der Längsfugenspalt (L) erzeugt wird, indem das neue Paneel (24) temporär aus seiner parallelen Ausrichtung zur vorherigen Paneelreihe (P2) gebracht und die Keilspitze des Längsfugenspalts (L) am entfernten Ende der ersten Längskante (24a) des neuen Paneels (24) erzeugt wird.

20. Verfahren nach Anspruch 18, **dadurch gekennzeichnet, dass** der Längsfugenspalt (L) erzeugt wird, indem das neue Paneel (24) temporär aus seiner ebenen Form gebracht wird, in dem es aus seiner Ebene in Richtung seiner Oberseite (4, 4') gewölbt wird.

## Claims

1. A panel (1, 1') including a top side (4, 4'), an underside (12, 12'), a body (9, 9'), complementary locking means provided in pairs at mutually opposite panel edges, at least one pair of locking means with hook profiles (H), namely a receiving hook (7) and in opposite relationship thereto an arresting hook (8), with the proviso that the receiving hook has arranged remote from the body a hook edge (10) and arranged nearer to the body a receiving recess (11), wherein the receiving recess is open towards the top side, the arresting hook is provided with an arresting recess (13) arranged nearer to the body and open to the underside and has an arresting step (14) arranged remote from the body and which fits in a vertical joining direction (T) into the receiving recess (11) of the receiving hook (7), the arresting hook (8) has a transverse joining surface (15) remote from the body and also remote from the body a vertically acting arresting contour (16), the receiving hook (8) has nearer to the body a transverse joining surface (17) and also nearer to the body a positively locking contour (18) which fits together in positively locking relationship with the arresting contour (16), that is remote from the body, of the arresting hook (17) so that locking can be implemented perpendicularly to the plane of mounted panels, the arresting hook (17) has arranged nearer to the body a horizontal locking surface (19) at its arresting step (14), the receiving hook (7) has arranged remote from the body a horizontal locking surface (20) in the receiving recess (11), formed at the receiving hook (7) is a receiving opening (21) through which the arresting step (14) can be inserted substantially in the joining direction (T) into the receiving recess (11), wherein the arresting step (14) and the receiving opening (21) are of such a configuration that the step end during a joining movement initially fits without elastic deformation of the hook profiles (H) into the receiving opening (21), to such an extent that the horizontal locking surface (19) of the arresting hook (8) makes contact with a part of its surface with the horizontal locking surface (20) of the receiving hook (7), whereas the hook edge (10) of the receiving hook (7) and the arresting recess (13) of the arresting hook (8) form a lower latching means (V2), and that the arresting hook (8) has a flexural region, **characterised in that** provided remote from the body at the hook edge of the receiving hook is a female latching element (10a) or a male latching element (10c), and wherein the arresting recess (13) has near the body a female latching element (13a) or a male latching element (13c) complementary thereto, and that also the receiving hook (7) has a flexural region.

2. A panel according to claim 1 **characterised in that** the underside of the receiving hook (7) is disposed in a plane identical to the plane of the underside (12, 12') of the panel.

3. A panel according to claim 1 or claim 2 **characterised in that** the arresting contour (16) and the positively locking contour (18) desirably form an upper latching means (V1), wherein the arresting contour has a female latching element (16a) or a male latching element (16c) and wherein the positively locking contour (18) has a female latching element (18a) or male latching element (18c) complementary to the arresting contour.

4. A panel according to claim 3 **characterised in that** each female latching element has a latching surface (13b, 16b, 10d, 18d) which is directed towards the top side (4, 4') or underside (12, 12') of the panel, each male latching element has a complementary latching surface (10b, 13d, 16d, 18b) directed towards the respective other side of the panel, and the latching surface of the female latching element together with the latching surface of the male latching element in the locked condition of two panels counteract a movement of locked panels away from each other perpendicularly to the panel plane.

5. A panel according to claim 4 **characterised in that** the latching surface (13b, 16b, 10d, 18d) of the female latching element is in contact with the latching surface (10b, 13d, 16d, 18b) of the male latching element in the locked condition of two panels.

6. A panel according to claim 4 **characterised in that** a gap is provided between the latching surface of the female latching element and the latching surface of the associated male latching element in the locked condition of two panels.

7. A panel according to one of claims 1 to 6 **characterised in that** during the joining movement firstly the upper latching means (V1) and then the lower latching means (V2) are completely joined together.

8. A panel according to claim 7 **characterised in that** the flexural region is in the form of a flexural leg (22, 23).

9. A panel according to one of claims 1 to 8 **characterised in that** the horizontal locking surfaces (19, 20) of the hook profiles (H) are inclined through an angle of 0° to 25° relative to the surface normal of the top side (4, 4') and in the locked condition of two panels are arranged in substantially mutually parallel relationship.

10. A panel according to one of claims 1 to 9 **characterised in that** remote from the body the hook edge (10) has an inclined sliding surface.

11. A panel according to one of claims 1 to 10 **characterised in that** on its side remote from the body the arresting step (14) has an inclined sliding surface (14a).

12. A panel according to one of claims 1 to 11 **characterised in that** there are provided a pair of pivotal profile portions (S), namely a groove profile portion (2) with undercut configuration (2c) of a groove wall (2b) and a tongue profile portion (3) with undercut configuration (3c) of a tongue side (3c).

13. A panel according to one of claims 1 to 12 **characterised in that** there is provided a decorative layer at the top side (4, 4').

14. A panel according to one of claims 1 to 13 **characterised in that** provided at the top side (4, 4') is a transparent cover layer through which the body (9, 9') or the decorative layer is visible.

15. A panel according to one of claims 1 to 14 **characterised in that** provided at its underside (12, 12') is a backing layer.

16. A panel according to one of claims 1 to 15 **characterised in that** the body (9, 9') at least partially comprises a wood material.

17. A panel according to one of claims 1 to 16 **characterised in that** the body (9, 9') at least partially comprises a plastic material.

18. A method of simultaneously locking a new quadrangular panel (24) according to the invention is provided with two longitudinal edges (24a, 24b) and two transverse edges (24c, 24d) to a previous panel row (P2) already assembled from identical panels and to an identical panel (25) already assembled in the same panel row (P2) with the proviso that a first longitudinal edge (24a) is connected to the previous panel row (P2) in positively locking relationship by pivoting the new panel (24) into the plane of the assembled panels, wherein at the same time a first transverse edge (24c) of the new panel (4) is brought by a scissor-like movement into positively locking engagement with a second transverse edge (25d) of the assembled panel (25) in the same panel row (P2), with the further proviso that the first transverse edge of the panels respectively has a first transverse joining surface (15) and the second transverse edge of the panels respectively has a second transverse joining surface (17), wherein the first transverse joining surface (15) is brought into contact at that end which is towards the first longitudinal edge with the second transverse joining surface (17) of the assembled panel (25) in the same panel row (P2), wherein the positively locking connection of the longitudinal edge and the transverse edge of the new panel is produced by a longitudinal join gap (L) and a transverse join gap (Q) being produced between the new panel (24) and the previous panel row (P2), the wedge tip of the transverse join gap (Q) points in the direction of the previous panel row (P2) and the wedge tip of the longitudinal join gap (L) points in the direction of the free second transverse edge (24d) of the new panel (24), and the new panel is finally pivoted into the plane of the assembled panels, wherein the positively locking engagement of the transverse edges and longitudinal edges is completely brought together and the wedge-shaped join gaps (L, Q) are removed.

19. A method according to claim 18 **characterised in that** the longitudinal join gap (L) is produced by the new panel (24) being temporarily brought out of its parallel orientation with the previous panel row (P2) and the wedge tip of the longitudinal join gap (L) being produced at the remote end of the first longitudinal edge (24a) of the new panel (24).

20. A method according to claim 18 **characterised in that** the longitudinal join gap (L) is produced by the new panel (24) being temporarily brought out of its flat form by being curved out of its plane in the direction of its top side (4, 4').

## Revendications

1. Panneau (1, 1'), comprenant une face supérieure (4, 4'), une face inférieure (12, 12'), un corps (9, 9'), des moyens de verrouillage complémentaires qui sont prévus par paire sur les chants opposés du panneau, au moins une paire de moyens de verrouillage avec profilés en crochet (H), à savoir un crochet de réception (7) et, opposé à celui-ci, un crochet d'arrêt (8), sous réserve que le crochet de réception présente, disposé loin du corps, un rebord (10) et, disposé plus près du corps, un évidement de réception (11), l'évidement de réception étant ouvert vers la face supérieure, que le crochet d'arrêt soit muni d'un évidement d'arrêt (13) disposé plus près du corps et ouvert vers la face inférieure et présente, disposé loin du corps, un épaulement d'arrêt (14) qui s'insère dans le sens d'assemblage vertical (T) dans l'évidement de réception (11) du crochet de réception (7), que le crochet d'arrêt (8) présente une surface de jointure transversale (15) éloignée du corps et, également disposé loin du corps, un contour d'arrêt (16) agissant verticalement, que le crochet de réception (7) présente, plus près du corps, une surface de jointure transversale (17) et, également plus près du corps, un contour à complémentarité de forme (18) qui se conforme par complémentarité de forme au contour d'arrêt (16), éloigné du corps, du crochet d'arrêt, afin qu'un verrouillage perpendiculaire au plan des panneaux montés puisse être réalisé, que le crochet d'arrêt (8) présente, disposée plus près du corps, une surface de verrouillage horizontal (19) sur son épaulement d'arrêt (14), que le crochet de réception (7) présente, disposée loin du corps, une surface de verrouillage horizontal (20) dans l'évidement de réception (11), que soit formée sur le crochet de réception (7) une ouverture de réception (21) à travers laquelle l'épaulement d'arrêt (14) peut être inséré essentiellement dans le sens d'assemblage (T) dans l'évidement de réception (11), l'épaulement d'arrêt (14) et l'ouverture de réception (21) étant agencés de sorte que pendant un mouvement d'assemblage, l'extrémité de l'épaulement s'insère dans un premier temps, sans déformation élastique des profilés en crochet (H), dans l'ouverture de réception (21) de sorte que la surface de verrouillage horizontal (19) du crochet d'arrêt (8) entre, par une partie de sa surface, en contact avec la surface de verrouillage horizontal (20) du crochet de réception (7), **caractérisé en ce que** le rebord (10) du crochet de réception (7) et l'évidement d'arrêt (13) du crochet d'arrêt (8) forment un dispositif d'encliquetage inférieur (V2), un élément d'encliquetage mâle (10a) ou un élément d'encliquetage femelle (10c), disposé loin du corps, étant prévu sur le rebord de crochet du crochet de réception et l'évidement d'arrêt (13) présentant, disposé près du corps, un élément d'encliquetage complémentaire femelle (13a) ou mâle (13c), et que le crochet d'arrêt et le crochet de réception présentent une zone de flexion.

2. Panneau selon la revendication 1, **caractérisé en ce que** la face inférieure du crochet de réception (7) est située dans un plan qui est identique au plan de la face inférieure (12, 12') du panneau.

3. Panneau selon les revendications 1 ou 2, **caractérisé en ce que** le contour d'arrêt (16) et le contour à complémentarité de forme (18) forment un dispositif d'encliquetage supérieur (VI), le contour d'arrêt présentant un élément d'encliquetage femelle (16a) ou un élément d'encliquetage mâle (16c) et le contour à complémentarité de forme (18) présentant un élément d'encliquetage mâle (18a) ou femelle (18c) complémentaire au contour d'arrêt.

4. Panneau selon la revendication 3, **caractérisé en ce que** chaque élément d'encliquetage femelle présente une surface d'encliquetage (13b, 16b, 10d, 18d) qui est dirigée vers la face supérieure (4, 4') ou la face inférieure (12, 12') du panneau, que chaque élément d'encliquetage mâle présente une surface d'encliquetage complémentaire (10b, 13d, 16d, 18b) qui est orientée vers l'autre face respective du panneau et que la surface d'encliquetage de l'élément d'encliquetage femelle et la surface d'encliquetage de l'élément d'encliquetage mâle, lorsque deux panneaux sont verrouillés, s'opposent à un écartement des panneaux verrouillés dans le plan perpendiculaire au plan des panneaux.

5. Panneau selon la revendication 3, **caractérisé en ce que** la surface d'encliquetage (13b, 16b, 10d, 18d) de l'élément d'encliquetage femelle touche, lorsque deux panneaux sont verrouillés, la surface d'encliquetage (10b, 13d, 16d, 18b) de l'élément d'encliquetage mâle.

6. Panneau selon la revendication 3, **caractérisé en ce qu'**un espace est prévu entre la surface d'encliquetage de l'élément d'encliquetage femelle et la surface d'encliquetage de l'élément d'encliquetage mâle lorsque deux panneaux sont verrouillés.

7. Panneau selon l'une des revendications 1 à 6, **caractérisé en ce que** pendant le mouvement d'assemblage, dans un premier temps le dispositif d'encliquetage supérieur (V1), puis le dispositif d'encliquetage inférieur (V2) sont complètement assemblés.

8. Panneau selon la revendication 7, **caractérisé en ce que** la zone de flexion est formée comme entretoise flexible (22, 23).

9. Panneau selon l'une des revendications 1 à 8, **caractérisé en ce que** les surfaces de verrouillage horizontal (19, 20) des profilés en crochet(H) sont inclinées d'un angle de 0° à 25° par rapport aux normales à la surface de la face supérieure (4, 4') et qu'elles sont essentiellement disposées parallèlement l'une à l'autre quand deux panneaux sont verrouillés.

10. Panneau selon l'une des revendications 1 à 9, **caractérisé en ce que** le rebord du crochet (10) présente, éloigné du corps, un chanfrein de glissement.

11. Panneau selon l'une des revendications 1 à 10, **caractérisé en ce que** l'épaulement d'arrêt (14) présente un chanfrein de glissement (14a) sur son côté éloigné du corps.

12. Panneau selon l'une des revendications 1 à 11, **caractérisé en ce qu'**une paire de profilés basculants (S) sont prévus, à savoir un profilé à rainure (2) avec contre-dépouille (2c) d'une paroi de la rainure (2b) et un profilé à languette (3) avec contre-dépouille (3c) d'un côté de la languette (3c).

13. Panneau selon l'une des revendications 1 à 12, **caractérisé en ce qu'**une couche décorative est prévue sur la face supérieure (4, 4').

14. Panneau selon l'une des revendications 1 à 13, **caractérisé en ce que** sur la face supérieure (4, 4') est prévue une couche de finition transparente à travers laquelle le corps (9, 9') ou la couche décorative sont visibles.

15. Panneau selon l'une des revendications 1 à 14, **caractérisé en ce qu'**une couche de contrebalancement est prévue sur sa face inférieure (12, 12').

16. Panneau selon l'une des revendications 1 à 15, **caractérisé en ce que** le corps (9, 9') est au moins partiellement constitué d'un matériau dérivé du bois.

17. Panneau selon l'une des revendications 1 à 16, **caractérisé en ce que** le corps (9, 9') est au moins partiellement constitué d'une matière plastique.

18. Procédé permettant de verrouiller un nouveau panneau rectangulaire (24) selon l'une des revendications 1 à 17, muni de deux chants longitudinaux (24a, 24b) et de deux chants transversaux (24c, 24d), simultanément avec une rangée de panneaux (P2) déjà montée à partir de panneaux identiques et avec un panneau identique (25), déjà monté, de la même rangée de panneaux (P2), sous réserve qu'un premier chant longitudinal (24a) soit relié par complémentarité de forme à la rangée de panneaux précédente (P2) par basculement du nouveau panneau (24) dans le plan du panneau monté, un premier chant transversal (24c) du nouveau panneau (24) étant mis, par un mouvement de ciseaux, en prise par complémentarité de forme avec un deuxième chant transversal (25d) du panneau monté (25) de la même rangée de panneaux (P2), sous réserve supplémentaire que le premier chant transversal des panneaux présente respectivement une première surface de jointure transversale (15) et que le deuxième chant transversal des panneaux présente respectivement une deuxième surface de jointure transversale (17), la première surface de jointure transversale (15) étant, à l'extrémité qui est orientée vers le premier chant longitudinal, mise en contact avec la deuxième surface de jointure transversale (17) du panneau monté (25) de la même rangée de panneaux (P2), la liaison par complémentarité de forme du chant longitudinal et du chant transversal du nouveau panneau étant effectuée par la formation, entre le nouveau panneau (24) et la rangée de panneaux précédente (P2), d'une rainure de joint longitudinale (L) et d'une rainure de joint transversale (Q), que la pointe de coin de la rainure de joint transversale (Q) soit orientée vers la rangée de panneaux précédente (P2) et que la pointe de coin de la rainure de joint longitudinale (L) soit orientée vers le deuxième chant transversal libre (24d) du nouveau panneau (24), et que le nouveau panneau soit finalement basculé dans le plan des panneaux montés, l'engagement par complémentarité de forme des chants transversaux et longitudinaux soit complètement assemblé et que les rainures de joint en forme de coin (L,Q) soient supprimées.

19. Procédure selon la revendication 18, **caractérisée en ce que** la rainure de joint longitudinale (L) soit produite en sortant temporairement le nouveau panneau (24) de son orientation parallèle à la rangée de panneaux précédente (P2) et en formant la pointe de coin de la rainure de joint longitudinale (L) à l'extrémité éloignée du premier champ longitudinal (24a) du nouveau panneau (24).

20. Procédure selon la revendication 18, **caractérisée en ce que** la rainure de joint longitudinale (L) est formée en sortant temporairement le nouveau panneau (24) de sa forme plane en le courbant hors de son plan vers sa face supérieure (4, 4').
